# EUROPÄISCHE PATENTSCHRIFT

(11) **EP 4 612 778 B1**
(45) Veröffentlichungstag und Bekanntmachung des Hinweises auf die Patenterteilung: **11.03.2026**
(21) Anmeldenummer: 24805525.3
(22) Anmeldetag: 12.11.2024
(51) Int. Cl.: H02K 1/276, H02K 15/03

(54) **SEGMENTIERUNGSANORDNUNG FÜR PERMANENTMAGNETE EINER DOPPEL-V-ANORDNUNG IN EINEM ROTOR FÜR EINE PERMANENTERREGTE ELEKTRISCHE MASCHINE**
SEGMENTATION ARRANGEMENT FOR PERMANENT MAGNETS OF A DOUBLE V-ASSEMBLY IN A ROTOR FOR A PERMANENTLY EXCITED ELECTRIC MACHINE
AGENCEMENT DE SEGMENTATION POUR AIMANTS PERMANENTS D'UN AGENCEMENTEN EN DOUBLE-V DANS UN ROTOR POUR UNE MACHINE ÉLECTRIQUE À EXCITATION PERMANENTE

(30) Priorität: 22.11.2023 DE 102023004778
(43) Veröffentlichungstag der Anmeldung: 10.09.2025
(73) Patentinhaber: Mercedes-Benz Group AG, 70372 Stuttgart (DE)
(72) Erfinder: MIRANDA, Eduardo, 70180 Stuttgart (DE); MARKOVIK, Aleksandar, 70806 Kornwestheim (DE); PFEIFER, Hermann, 89129 Langenau (DE); PENABAD DURÁN, Patricia, 70182 Stuttgart (DE)
(74) Vertreter: Novagraaf Group
(86) Internationale Anmeldenummer: PCT/EP2024/082070
(87) Internationale Veröffentlichungsnummer: WO 2025/108783

(56) Entgegenhaltungen:
- EP-A1- 2 264 860
- FR-A1- 3 134 669
- US-A1- 2016 005 525

## Beschreibung

Die Erfindung betrifft eine Segmentierungsanordnung eines inneren beziehungsweise innenliegenden und eines äußeren beziehungsweise außenliegenden Magneten zumindest eines Schenkels zumindest einer Doppel-V-Anordnung von Permanentmagneten in einem Rotor für eine permanenterregte elektrische Maschine. Ebenso betrifft die Erfindung einen Rotor umfassend zumindest eine solche Doppel-V-Anordnung mit zumindest 4 Permanentmagneten sowie eine permanenterregte elektrische Maschine umfassend zumindest einen Rotor.

Bei elektrischen Maschinen kann es sich beispielsweise um Elektromotoren und/oder Generatoren handeln, wobei insbesondere im Bereich der Kraftfahrzeuge beispielsweise Elektromotoren verwendet werden. Besonders bevorzugt ist hierbei die Verwendung eines Elektromotors zum Fahrantrieb eines Fahrzeugs. Eine bevorzugte Ausbildungsform ist hierbei eine rotatorische elektrische Maschine, bei welcher sich in einem Stator, welcher beispielsweise mit einem Kraftfahrzeug fest verbunden ist, ein Rotor dreht. Eine permanenterregte elektrische Maschine kann sich hierbei dadurch auszeichnen, dass sich in dem Rotor Permanentmagnete befinden, während sich in dem Stator Spulen befinden, mittels welchen über einen Stromfluss ein magnetisches Drehfeld erzeugt werden kann.

Dieses magnetische Drehfeld der Spulen ist nun nicht konstant, sondern verändert sich mit der Zeit, indem der Stromfluss durch die Spulen entsprechend zeitlich reguliert wird. Hierdurch kommt es zu sich zeitlich verändernden Magnetfeldern, welche mit den Magnetfeldern der Permanentmagnete im Rotor wechselwirken, wodurch sich der Rotor gleichmäßig dreht, wenn die zeitliche Änderung des Stromflusses entsprechend mit der Drehbewegung des Rotors koordiniert wird.

Diese zeitliche Änderung des Magnetfeldes durch die zeitliche Änderung des Stromflusses durch die Spulen hat jedoch noch zumindest eine weitere Auswirkung. So kann ein sich zeitlich veränderndes Magnetfeld beispielsweise nach den Maxwellschen Gleichungen zu einem elektrischen Wirbelfeld führen. Dieses elektrische Wirbelfeld kann sich hierbei insbesondere im Rotor der permanenterregten elektrischen Maschine bilden, da dieses in direktem Zusammenhang zu dem sich verändernden magnetischen Feld steht, welches ebenfalls in den Rotor eindringt.

Der Rotor der permanenterregten elektrischen Maschine kann jedoch insbesondere aus einem elektrisch leitenden Material bestehen, wodurch durch die elektrischen Wirbelfelder in dem Rotor ein Stromfluss induziert wird, welcher entsprechend Wirbelstrom genannt wird. Dies führt jedoch zu einer ungewollten Erwärmung des Rotors und zu Wirkungsgradverlusten. Eine Gegenmaßnahme hierfür kann eine geblechte Bauweise sein.

Zusätzlich oder alternativ hierzu können auch die Permanentmagnete im Rotor aus einem elektrisch leitenden Material bestehen. So besitzen insbesondere gesinterte Nd-Fe-B-Magnete eine hohe Leitfähigkeit. Da die sich verändernden Magnetfelder der Spulen auch in die Permanentmagnete des Rotors eindringen können, können ebenso in den Permanentmagneten elektrische Wirbelströme erzeugt werden, was zu einer unerwünschten Erwärmung sowie zu unerwünschten Wirkungsgradverlusten führen kann.

Eine Möglichkeit, dem entgegenzuwirken, ist eine Segmentierung der Permanentmagnete. Beispiele für eine Segmentierung können den Druckschriften DE 10 2021 006 006 A1, DE 10 2021 002 942 A1, EP3 457 532 A1, EP 3 457 535, EP 2 264 860, US 2016/005525, und FR 3 134 669 entnommen werden. Eine Segmentierung beispielsweise eines Permanentmagneten kann sich somit beispielsweise dadurch auszeichnen, dass Schnitte und/oder Einschnitte und/oder Ausschneidungen an dem Permanentmagneten vorgenommen wurden, was zu einer Vergrößerung der Oberfläche führen kann. Insbesondere führt dies jedoch dazu, dass der gesamte Permanentmagnet unterteilt wird in mehrere Bereiche, welche kleiner sind als der ursprüngliche Permanentmagnet. Hierbei können die Bereiche zusammenhängend sein oder nicht, wobei ein Stromfluss zwischen den Bereichen verhindert oder nur über die Verbindungen (beispielsweise in Form von Materialbrücken) zugelassen wird. Eine weitere Möglichkeit der Segmentierung besteht somit aus einem Aufbau eines Permanentmagneten aus mehreren Permanentmagneten, welche über elektrisch nichtleitende Schichten miteinander verbunden werden.

Somit kann eine Segmentierung eines Permanentmagneten auf mehrere Arten erfolgen. Beispiele hierfür wären ein Stapel von einzelnen Permanentmagneten vorzugsweise durch elektrisch nichtleitende Schichten verbunden und/oder Schnitte in dem Permanentmagneten, welche durch den Permanentmagneten durchgehen, wie es beispielsweise für mäanderförmige Schnitte in Fig. 8 der Druckschrift DE 10 2021 002 942 A1 gezeigt wird, und/oder Einschnitte, welche nur einen Teilbereich des Permanentmagneten durchschneiden, wie es beispielsweise in Fig. 6 der Druckschrift DE 10 2021 002 942 A1 gezeigt wird, wobei die hierdurch bestehen bleibende Materialbrücke mit dem Bezugszeichen W kennzeichnet wurde. Hierbei können die Schnitte und/oder Einschnitte unterschiedliche Formen haben, beispielsweise kammartig, mäanderartig und/oder durchgehend. Zusätzlich oder alternativ hierzu können auch Ausschneidungen möglich sein.

Ein Schnitt oder die Schnittebene verläuft hierbei in einer Richtung durch den gesamten Permanentmagneten, das heißt, vorzugsweise in der Richtung senkrecht zu der Oberfläche, in welcher der Schnitt gemacht werden soll (hierbei handelt es sich vorzugsweise um diejenige zumindest eine Oberfläche des Permanentmagneten, welche den größten Flächeninhalt aufweist). Ein Einschnitt oder eine Nut hingegen ist analog zu einem Schnitt, mit dem Unterschied, dass der Einschnitt in der einen Richtung nicht durch den gesamten Magneten verläuft, sodass insbesondere in dieser Richtung eine Materialbrücke bestehen bleibt, durch welche durch einen Einschnitt getrennte Bereiche weiterhin zumindest teilweise miteinander verbunden sind. Bei einer Ausschneidung handelt es sich hingegen um mehrere Schnitte, welche zu einer geschlossenen Form verbunden sind, sodass der Inhalt der Form aufgrund der Schnitte nicht mehr mit dem Rest des Permanentmagneten verbunden ist. Bei den Ausschneidungen kann es sich also Löcher insbesondere Durchgangslöcher beliebiger Form handeln.

Eine Segmentierung kann sich hierbei vorzugsweise durch eine Richtung auszeichnen. Diese Richtung der Segmentierung soll durch die Segmentierungsgrenzen bestimmt sein. Die Segmentierungsgrenzen sind hierbei diejenigen Schnitte und/oder Einschnitte und/oder Ausschneidungen und/oder Schichten, welche als Abgrenzungen zwischen den einzelnen Bereichen des Permanentmagneten dienen. Insbesondere können die Segmentierungsgrenzen parallel insbesondere planparallel zueinander verlaufen. Die bevorzugte Richtung dieser Segmentierungsgrenzen, das heißt diejenige Richtung, in welche die Segmentierungsgrenzen bei Betrachtung des gesamten Permanentmagneten durchschnittlich am häufigsten verlaufen, soll hierbei als die durch die Segmentierungsgrenzen bestimmte Richtung der Segmentierung angesehen werden. Diese Richtung wird auch als Segmentierungsrichtung bezeichnet. Insbesondere ist die Segmentierungsrichtung bei parallel zueinander verlaufenden Segmentierungsgrenzen als Richtung parallel zu den Segmentierungsgrenzen anzusehen. Vorzugsweise wird für die Bestimmung der Segmentierungsrichtung lediglich jene zumindest eine Seite des Permanentmagneten betrachtet, welche den größten Flächeninhalt aufweist. Des Weiteren sei angemerkt, dass die Tiefenrichtung der Segmentierung, das heißt, die Richtung von der Oberfläche in den Permanentmagneten hinein, vorzugsweise senkrecht auf derjenigen zumindest einen Fläche mit dem größten Flächeninhalt steht.

Eine bevorzugte Anordnung der Permanentmagnete im Rotor ist hierbei die Doppel-V-Anordnung. Diese wird beispielsweise in den Druckschriften DE 10 2021 002 938 A1, DE 10 2021 002 130 A1, DE 10 2019 132 188 A1 und EP 3 352 337 A1 diskutiert. So kann der Rotor durch eine Rotationsachse beziehungsweise Rotorachse ausgezeichnet sein, um welche sich der Rotor dreht. Die Richtung entlang dieser Achse wird dabei als axiale Richtung bezüglich der Rotationsachse beziehungsweise als axiale Richtung bezeichnet. Diejenige Richtung, welche senkrecht auf der axialen Richtung steht und somit radial nach außen zeigt, wird hingegen als radiale Richtung bezeichnet. Als dritte Richtung soll noch die Umfangsrichtung definiert werden. Diese steht senkrecht auf der axialen Richtung und der radialen Richtung und weist somit in die Richtung einer Tangente, welche an einem Kreis mit der Rotationsachse als Mittelpunkt anliegt.

Wie beispielsweise aus den genannten Druckschriften hervorgeht, können die Permanentmagnete in einem Rotor in einer Doppel-V-Anordnung angeordnet sein, wie sie beispielsweise auch aus Fig. 1 der Druckschrift DE 10 2021 002 938 A1 hervorgeht. Hierbei kennzeichnet sich die Doppel-V-Anordnung unter anderem dadurch aus, dass die Permanentmagnete in dem Rotor entlang zweier in radialer Richtung nacheinander beziehungsweise übereinander oder hintereinander liegender "V" angeordnet sind, wobei je zwei Permanentmagnete die Schenkel jeweils eines "V" bilden. Der Schenkel eines "V" beschreibt hierbei die eine Seite eines Buchstaben V, welcher von der anderen Seite durch eine Symmetrieachse getrennt wird. Mit Schenkel einer Doppel-V-Anordnung sind hingegen zwei in radialer Richtung nacheinander beziehungsweise hintereinander oder übereinander gelegene Schenkel von zwei Vs einer Doppel-V-Anordnung gemeint.

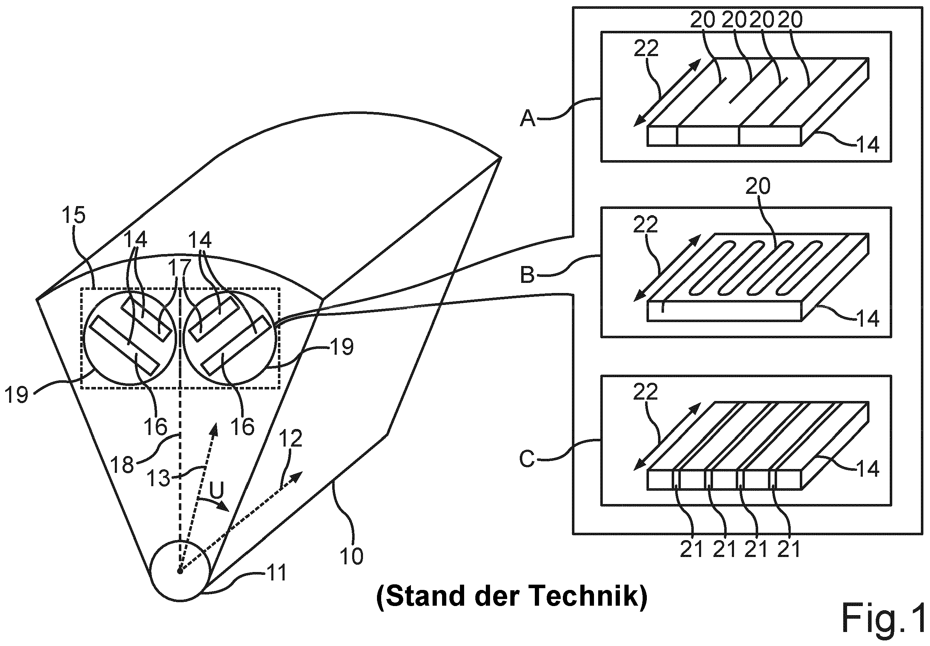

Dieser eben beschriebene Aufbau soll im Folgenden anhand der Fig. 1 veranschaulicht werden. So zeigt Fig. 1 einen Ausschnitt eines Rotors 10 insbesondere einer permanenterregten elektrischen Maschine, welcher sich um eine Rotationsachse 11 drehen kann. Anhand dieser Rotationsachse 11 seien auch die Richtungen definiert, wobei die Richtung entlang der Rotationsachse 11 als axiale Richtung 12 und die Richtung senkrecht zur Rotationsachse 11 und somit von der Rotationsachse nach außen zeigend als radiale Richtung 13 bezeichnet werden soll.

Innerhalb dieses Rotors 10 befinden sich zumindest vier Permanentmagnete 14, welche entsprechend einer Doppel-V-Anordnung 15 in dem Rotor 10 angeordnet sein können. Hierzu sind jeweils zwei Permanentmagnete 14 entsprechend eines "V" angeordnet, die Permanentmagnete bilden also die Schenkel des V, wobei jeweils zwei V in radialer Richtung 13 übereinander angeordnet sind. Die in radialer Richtung 13 innen gelegenen Permanentmagnete 14 werden dabei als innere Magnete 16 bezeichnet, während die in radialer Richtung 13 weiter außen liegenden Permanentmagnete 14 als äußere Magnete 17 bezeichnet werden.

Durch diesen Aufbau zeichnet sich die Doppel-V-Anordnung durch eine Symmetrieachse 18 aus, welche zwischen den Permanentmagneten 14 in radialer Richtung 13 verläuft. Diese unterteilt die Doppel-V-Anordnung in die beiden Segmentierungsanordnungen 19, welche jeweils aus je einem Schenkel jedes V bestehen.

Die Permanentmagnete 14 können hierbei eine Segmentierung aufweisen, wobei A, B, und C Beispiele für die Segmentierung eines Permanentmagneten 14 zeigen. Die in A und B dargestellten Linien zeigen hierbei Schnitte und/oder Einschnitte und/oder Ausschneidungen 20 des Permanentmagneten 14, durch welche dieser in verschiedene Bereiche aufgeteilt wird. C zeigt hingegen einen Permanentmagneten 14, welcher aus mehreren Permanentmagneten zusammengesetzt ist, welche die einzelnen Bereiche bilden und über elektrisch nichtleitende Schichten 21 aus elektrisch nichtleitendem Material miteinander verbunden sind, während A ein Beispiel für Schnitte zur Segmentierung zeigt und B beispielhaft einen mäanderförmigen Einschnitt aufzeigt. Diese Schnitte und/oder Einschnitte und/oder Ausschneidungen 20 und/oder die elektrisch nichtleitenden Schichten 21 stellen hierbei die Segmentierungsgrenzen dar. In A, B und C gibt hierbei jeweils ein Pfeil die durch die Segmentierungsgrenzen gegebene Richtung 22 der Segmentierung beziehungsweise die Segmentierungsrichtung 22 an.

Die gattungsbildende Schrift EP 2 264 860 A1 zeigt ebenfalls einen Rotor mit sogenannter Doppel-V-Anordnung, in dem Fall für eine schienengebundene Fahrzeugelektromaschine. Der Rotorkörper weist eine laminierte Blech-Anordnung mit einer Vielzahl von Längsschlitzen auf, um Magnete einzubetten. Hierzu sind die Magnete in Form von Paketen aus zwei oder mehr Permanentmagneten gebildet, die in einer Schicht nebeneinander in Quer- und/oder Längsrichtung des Schlitzes angeordnet sind. Schichten aus elektrisch isolierendem Material trennen einerseits die Permanentmagnete jedes Pakets voneinander und andererseits die Außenflächen des Permanentmagnetpakets von Abschnitten der Rotorkörperplatten, die den jeweiligen Schlitz definieren.

Auch aus der DE 10 2019 205 999 A1 ist ein Rotor einer elektrischen Maschine bekannt, bei dem sich im Lamellenpaket Magnettaschen in einer Doppel-V-Anordnung erstrecken. In den Magnettaschen ist jeweils ein Magnetkörper mit zumindest zwei, sich entlang der Rotorachse erstreckenden Permanentmagneten angeordnet, wobei der Magnetkörper ein Füllmaterial aus Kunststoff aufweist, in das die Permanentmagnete eingebettet sind.

Die DE 10 2013 211 858 A1 beschreibt einen Magneten für einen Rotor oder Stator einer elektrischen Maschine, mit einer Grundfläche und einer Anformung dazu, welche gegenüber der Grundfläche erhaben ist. Die Anformung an die Grundfläche des Magneten kann auch aus einem zweiten verdrehten Permanentmagnetteil bestehen, der die gleich Grundfläche aufweist wie ein erster Permanentmagnetteil. Der Rotor oder Stator ist aus einem Lamellenpaket gefertigt und weist eine Hinterschneidung auf, um die Anformung des Magneten aufzunehmen und diesen damit zu halten.

Der WO 2023/041260 A1 ist ein Magnetkörper aus einem permanentmagnetischen Material zu entnehmen, wobei der Magnetkörper eine Anzahl parallel zueinander verlaufender, schlitzförmiger erster Aussparungen aufweist, die sich von einer ersten Seite bis zu einem Zentrum des Magnetkörpers erstrecken und der Magnetkörper eine Anzahl parallel zueinander verlaufender, schlitzförmiger zweiter Aussparungen aufweist, die sich von einer gegenüberliegenden zweiten Seite bis zu dem Zentrum des Magnetkörpers erstrecken.

Ergänzend zeigt die EP 1 746 611 A1 einen Seltenerd-Permanentmagnet aus einem gesinterten Magnetkörper mit spezieller Zusammensetzung, wobei eine Vielzahl von Schlitzen in einer Oberfläche des Magnetkörpers gebildet sind.

Der Erfindung liegt hierbei als Aufgabe eine Verbesserung der Verlust-Einsparungen im Kontext einer permanenterregten elektrischen Maschine zu Grunde.

Die Aufgabe wird durch die Gegenstände der unabhängigen Patentansprüche gelöst. Vorteilhafte Weiterentwicklungen der Erfindung sind durch die abhängigen Patentansprüche, die folgende Beschreibung sowie die Figuren beschrieben.

Als Lösung umfasst die Erfindung eine Segmentierungsanordnung der Permanentmagnete insbesondere einer permanenterregten elektrischen Maschine, welche besonders bevorzugt als Fahrantrieb insbesondere für ein Kraftfahrzeug ausgestaltet ist. Die Erfindung betrifft hierbei eine Segmentierungsanordnung eines inneren und eines äußeren Magneten eines Schenkels einer Doppel-V-Anordnung von Magneten in einem Rotor für eine permanenterregte elektrische Maschine, wobei bei dem Schenkel in der beschriebenen Weise der innere Magnet in radialer Richtung bezüglich der Rotationsachse gesehen weiter innen angeordnet ist als der äußere Magnet. Wie schon aus dem Stand der Technik bekannt kann sich eine Segmentierung hierbei vorzugsweise durch eine Richtung auszeichnen. Erfindungsgemäß zeichnet sich eine Segmentierung des jeweiligen Magneten im Wesentlichen durch eine einzige Richtung aus, wobei die Richtung durch die Segmentierungsgrenzen bestimmt ist.

Es wird also hier zunächst nur ein Schenkel einer Doppel-V-Anordnung betrachtet, wobei hier auf die Orientierung der Segmentierungsrichtung des inneren Magneten gegenüber der Segmentierung des äußeren Magneten eingegangen werden soll. So ist die Segmentierungsanordnung dabei so ausgestaltet, dass die Segmentierungsgrenzen der Segmentierung des äußeren Magneten gegenüber den Segmentierungsgrenzen der Segmentierung des inneren Magneten einen Winkel β betragsmäßig von 80° bis 100° aufweisen.

Dies bedeutet, dass bei Betrachtung der Segmentierungsrichtungen des inneren und des äußeren Magneten des Schenkels der Doppel-V-Anordnung beziehungsweise der Segmentierungsanordnung diese Segmentierungsrichtungen im Wesentlichen orthogonal zueinander stehen, der Winkel β - betragsmäßig betrachtet - zwischen den beiden Richtungen also von 80° bis 100° gehen kann.

So konnte beobachtet werden, dass die Verluste durch elektrische Wirbelströme besonders effektiv unterdrückt werden, wenn der Winkel zwischen den Segmentierungsrichtungen des inneren und des äußeren Magneten einen bestimmten Winkelversatz aufweist. Durch eine Wahl des Winkels β, welcher betragsmäßig von 80° bis 100° gehen kann, kann genau jener beobachtete Effekt ausgenutzt werden. Somit ergibt sich hierdurch der Vorteil einer besonders effektiven Unterdrückung von elektrischen Wirbelströmen in zumindest einem Permanentmagneten - vorzugsweise in beiden Permanentmagneten des Schenkels der Doppel-V-Anordnung.

Die Erfindung umfasst auch Weiterbildungen, durch welche sich zusätzliche Vorteile ergeben.

Eine Weiterbildung sieht vor, dass der innere Magnet einen Überdeckungsbereich und einen direkt daran anschließenden Nicht-Überdeckungsbereich aufweist, wobei der Überdeckungsbereich einen radialen Winkelbereich des Schenkels beginnend an einer Symmetrieachse der Doppel-V-Anordnung beschreibt, in welchem sich sowohl der innere als auch der äußere Magnet befinden, während sich im Nicht-Überdeckungsbereich lediglich der innere Magnet befindet. Dies bedeutet, dass der innere Magnet in genau zwei Bereiche unterteilt wird. Hierbei wird ein Winkel φ betrachtet, welcher ausgehend von der Symmetrieachse der Doppel-V-Anordnung in diejenige Richtung geht, in welcher sich der betrachtete Schenkel befindet. Das bedeutet, dass der Winkel φ bei betrachten desjenigen Schenkels der Doppel-V-Anordnung, welcher sich bei einer Draufsicht auf einen Querschnitt des Rotors aus axialer Richtung rechts der Symmetrieachse befindet, der Winkel φ im Uhrzeigersinn betrachtet wird. Rechts der Symmetrieachse bedeutet hierbei, dass bei einer Draufsicht auf den Rotor und bei Betrachten der radialen Richtung von innen nach außen, der Schenkel rechts der Symmetrieachse ist. Entsprechend ist links der Symmetrieachse definiert, wobei bei Betrachten des Schenkels links der Symmetrieachse der Winkel φ entsprechend gegen den Uhrzeigersinn gemessen wird.

Wird nun von der Symmetrieachse aus in eine Winkelrichtung entsprechend der Messrichtung des Winkels φ jeweils ein Winkelbereich betrachtet, so ergibt sich als erster Winkelbereich, also als Winkelbereich mit kleinerem Winkel φ, ein Winkelbereich, in welchem sich sowohl der innere als auch der äußere Magnet befinden. Dieser Winkelbereich wird als Überdeckungsbereich bezeichnet. Direkt daran anschließend folgt der Nicht-Überdeckungsbereich, welcher sich dadurch auszeichnet, dass der Winkel φ größere Werte aufweist als der Winkel φ im Überdeckungsbereich und sich in diesem Bereich nur noch der innere Magnet befindet.

Zusammengefasst sind die Grenzen des Überdeckungsbereichs dadurch definiert, dass sie denjenigen Winkeln φ entsprechen, durch welche die in φ-Richtung gelegenen äußeren Enden des äußeren Magneten bestimmt sind. Der Nicht-Überdeckungsbereich schließt an den Überdeckungsbereich an und geht folglich von derjenigen Grenze des Überdeckungsbereichs, welche dem betragsmäßig größerem Wert von φ entspricht, zu dem äußeren Ende des inneren Magneten. Hierbei ist das äußere Ende des inneren Magneten dadurch definiert, dass der Winkel φ unter der Bedingung maximiert wird, dass eine Linie in radialer Richtung, welche mit der Symmetrieachse betragsmäßig den Winkel φ einschließt, den inneren Magneten zumindest berührt. Eine entsprechende Definition gilt für das äußere Ende des äußeren Magneten.

Die Weiterbildung sieht nun vor, dass der innere Magnet nur in dem Nicht-Überdeckungsbereich eine Segmentierung aufweist, was gleichzeitig bedeutet, dass der innere Magnet in dem Überdeckungsbereich keine Segmentierung aufweist und somit der innere Magnet in dem Überdeckungsbereich bezüglich der Segmentierung als ein einziger Bereich angesehen werden kann. Hierfür kann vorgesehen sein, für die Segmentierung des inneren Magneten keine Stapelung von Einzelmagneten vorzugsweise verbunden über elektrisch nichtleitende Schichten zu verwenden. Vorzugsweise wird hingegen für die Segmentierung des inneren Magneten ein Verfahren gewählt, bei welchem eine Segmentierung durch Schnitte und/oder Einschnitte und/oder Ausschneidungen erfolgt, wobei diese Schnitte und/oder Einschnitte und/oder Ausschneidungen durch den ganzen Magneten hindurch senkrecht zu der Richtung, in welcher der Winkel φ gemessen wird erfolgen können und/oder nur teilweise durch den inneren Magneten erfolgen können, sodass in der Dicke des inneren Magneten eine Materialbrücke stehen bleibt.

Als Vorteil ergibt sich hierbei, dass elektrische Wirbelströme in dem inneren und äußeren Magneten unterdrückt werden können, jedoch gleichzeitig die Segmentierungskosten durch die nicht-vollständige Segmentierung des inneren Magneten reduziert werden können. Die nicht-vollständige Segmentierung beschreibt hierbei, dass der innere Magnet lediglich im Nicht-Überdeckungsbereich eine Segmentierung aufweist, während dieser im Überdeckungsbereich keine Segmentierung aufweist. Des Weiteren ergibt sich der Vorteil, dass ein Drehmomentverlust, welcher durch eine Segmentierung entstehen kann, verringert werden kann.

Eine Weiterbildung hierzu sieht vor, dass die Segmentierung des inneren Magneten bis zu einem äußeren Ende des inneren Magneten reicht, wobei das äußere Ende dasjenige Ende des inneren Magneten ist, bei welchem der Winkel φ zwischen der Symmetrieachse der Doppel-V-Anordnung und dem äußeren Ende des inneren Magneten maximal ist. Hierbei wird der Winkel φ betragsmäßig sowie in die entsprechende Messrichtung betrachtet. Bei einem V wäre folglich das äußere Ende eines Schenkels die obere Spitze des entsprechenden Schenkels des V. Die Segmentierung des inneren Magneten geht also von dem äußeren Ende bis zu der Grenze des Nicht-Überdeckungsbereichs, welche durch einen Wert für den Winkel φ gekennzeichnet ist und nicht die Grenzfläche zwischen Überdeckungsbereich und Nicht-Überdeckungsbereich beschreibt.

Hierbei ist eine Segmentierung durch Schnitte und/oder Einschnitte von außen besonders einfach zu realisieren und deshalb besonders vorteilhaft. Unter Schnitten und/oder Einschnitten von außen sind hierbei Schnitte und/oder Einschnitte zu verstehen, welche von dem äußeren Ende des inneren Magneten vorzugsweise entgegen der Messrichtung des Winkels φ erfolgen. Somit wird für die Schnitte und/oder Einschnitte und/oder Ausschneidungen vorzugsweise keine Mäanderform gewählt. Hierdurch ergibt sich der Vorteil einer einfach zu realisierenden Segmentierung, durch welche sich die Vorteile der effektiven Unterdrückung der elektrischen Wirbelströme in dem zumindest einen Permanentmagneten ergeben, während der Drehmomentverlust aufgrund einer Segmentierung verringert wird.

Eine hierzu alternative Weiterbildung sieht vor, dass der innere Magnet vollständig segmentiert ist. Dies bedeutet, dass zumindest 90% derjenigen zumindest einen Oberfläche des inneren Magneten, welche den größten Flächeninhalt aufweist, durch die Segmentierung in mehrere Bereiche aufgeteilt ist. Vorzugsweise liegt eine Segmentierung der ganzen zumindest einen Oberfläche des inneren Magneten mit dem größten Flächeninhalt vor. Hierbei wird bevorzugt eine Segmentierung des inneren Magneten gewählt, bei welcher der innere Magnet als Stapel aus mehreren Permanentmagneten zusammengesetzt ist, welche durch elektrisch nichtleitende Schichten miteinander verbunden sind. Alternativ hierzu wird eine Segmentierung bevorzugt, bei welcher Schnitte ausgehend von derjenigen zumindest einen Oberfläche des inneren Magneten, welche den größten Flächeninhalt aufweist, senkrecht zur Fläche durch den inneren Magneten durchgehen, wobei zumindest 90% der zumindest einen Oberfläche, welche den größten Flächeninhalt aufweist, auf diese Art und Weise segmentiert ist. Hierdurch ergibt sich der Vorteil, dass Methoden zur Segmentierung verwendet werden können, welche im Kontext einer nur teilweisen Segmentierung des inneren Magneten nicht oder nur eingeschränkt zur Verfügung stehen.

Eine Weiterbildung umfasst nun, dass der Winkel α zwischen den Segmentierungsgrenzen des inneren Magneten und Umfangsrichtung 0° beträgt. Hierbei gilt, dass die radiale Richtung senkrecht zur axialen Richtung bezüglich der Rotationsachse zeigt und von der Rotationsachse weg zeigt, während die Umfangsrichtung senkrecht zur radialen Richtung und der axialen Richtung bezüglich der Rotationsachse zeigt. Das bedeutet, dass der Winkel α den Winkel zwischen der Segmentierungsrichtung des inneren Magneten und der Umfangsrichtung beschreibt und 0° beträgt, beziehungsweise die Segmentierungsrichtung und die Umfangsrichtung in die gleiche Richtung zeigen. Vorzugsweise wird hierbei für die Segmentierung ein Verfahren verwendet, bei welchem der innere Magnet als Stapel aus mehreren Permanentmagneten verbunden durch Schichten elektrisch nichtleitenden Materials besteht, oder die Segmentierung sich lediglich durch Schnitte und/oder Einschnitte in Umfangsrichtung auszeichnet. Vorzugsweise betragen somit alle Winkel, durch welche die Segmentierung charakterisiert ist, ein Vielfaches von 90°. Das heißt, die Schnitte und/oder Einschnitte beziehungsweise die die Permanentmagnete trennenden elektrisch nichtleitenden Schichten stehen senkrecht auf den Oberflächen des inneren Magneten, die sie durchtrennen.

Hierbei ist die Grundform der Permanentmagnete vorzugsweise eine Quaderform, welcher bevorzugt durch drei unterschiedlich lange Seiten oder Kanten beziehungsweise Vektoren aufgespannt wird. Insbesondere ergeben sich hiermit diejenigen gegenüberliegenden Flächen, welche von den längsten beiden der drei unterschiedlich langen Seiten aufgespannt werden, als Flächen mit größtem Flächeninhalt, und somit als Flächen für die Segmentierung.

Hierdurch ergibt sich der Vorteil, dass die Segmentierung durch die rechten Winkel leicht durchzuführen sein kann, sowie ein Winkel α von 0° im Herstellungsprozess einfach und somit kostengünstig realisiert werden kann.

Eine Weiterbildung umfasst nun, dass es sich unter der Voraussetzung einer vollständigen Segmentierung des inneren Magneten und einem Winkel α von 0° zur Bereitstellung der Segmentierung des inneren Magneten eine Stapelung einzelner Magnete und/oder Schnitte und/oder Einschnitte und/oder Ausschneidungen auf zumindest 90% der Gesamtfläche des inneren Magneten vorliegen und somit die durch die Segmentierung entstehende Bereiche eine Quaderform aufweisen. Hierbei kann vorausgesetzt werden, dass der innere Magnet selbst eine Quaderform aufweist. Dies bedeutet insbesondere, dass Winkel zwischen den Segmentierungsgrenzen und den Oberflächen des inneren Magneten jeweils immer ein Vielfaches von 90° betragen, wie es bereits bei der Wahl α=0° der Fall sein kann. Somit ergeben sich durch die Segmentierung Bereiche, welche eine Quaderform aufweisen, die Bereiche bilden also Parallelepipeds, bei welchen jeder Winkel 90° beträgt.

Insbesondere kann hierbei die Segmentierung bevorzugt über eine Stapelung mehrerer Permanentmagnete erfolgen, welche über elektrisch nichtleitende Schichten miteinander verbunden sind. Zusätzlich oder alternativ wird eine Segmentierung bevorzugt, welche durch Schnitte charakterisiert ist, welche über zumindest 90% derjenigen zumindest einen Oberfläche des inneren Magneten gehen, welche den größten Flächeninhalt aufweist.

Als Vorteil ergibt sich hierbei die leicht zu realisierende Segmentierung, durch welche eine effektive und kostengünstige Produktion erreicht werden kann.

Eine Weiterbildung sieht nun vor, dass als Erweiterung der vorher betrachteten Merkmale der Winkel α des inneren Magneten betragsmäßig einen Wert α von 0° bis 45° aufweist. Der Winkel α ist hierbei in bereits beschriebener Weise derjenige Winkel, welchen die Segmentierungsrichtung mit der Umfangsrichtung einschließt. Dies bedeutet, dass die Segmentierungsrichtung des inneren Magneten im Wesentlichen in Umfangsrichtung zeigt, wodurch eine besonders effektive Unterdrückung von elektrischen Wirbelströmen in dem inneren Magneten gewährleistet werden kann.

Eine Weiterbildung sieht nun vor, dass der äußere Magnet eine Segmentierung aufweist, deren Segmentierungsgrenzen zu der axialen Richtung bezüglich der Rotationsachse betragsmäßig einen Winkel α2 von 0° bis 45° aufweisen. Dies bedeutet, dass die Segmentierungsrichtung mit der axialen Richtung einen Winkel α2 einschließt, welcher betragsmäßig einen Wert von 0° bis 45° aufweisen kann. Die Segmentierungsrichtung des äußeren Magneten ist also im Wesentlichen parallel zur axialen Richtung. Hierdurch ergibt sich eine besonders effektive Unterdrückung von elektrischen Wirbelströmen in dem äußeren Magnet.

Bisher wurde lediglich von einem Schenkel der beiden Schenkel einer Doppel-V-Anordnung ausgegangen, was der Segmentierungsanordnung entspricht. Die Merkmale der Segmentierungsanordnung lassen sich folglich auf beide Schenkel der Doppel-V-Anordnung anwenden.

Somit umfasst die Erfindung als weitere Lösung eine Doppel-V-Anordnung umfassend zwei Segmentierungsanordnungen, wobei jede Segmentierungsanordnung die Merkmale einer Ausführungsform einer der vorhergehend beschriebenen Segmentierungsanordnungen umfasst sowie jeweils einen Schenkel der Doppel-V-Anordnung bildet, wobei die Segmentierungsanordnungen derart angeordnet sind, dass diese symmetrisch zur Symmetrieachse der Schenkel der Doppel-V-Anordnung sind. Dies bedeutet, dass jeweils zwei Segmentierungsanordnungen jeweils eine Doppel-V-Anordnung bilden. Hierzu sind die Segmentierungsanordnungen derart platziert, dass zwischen diesen beiden Segmentierungsanordnungen in radialer Richtung die Symmetrieachse verläuft, zu welcher die Segmentierungsanordnungen symmetrisch angeordnet sind. Dies bedeutet gleichzeitig, dass die beiden Segmentierungsanordnungen bevorzugt die gleichen Merkmale aufweisen. Des Weiteren können die Segmentierungsanordnungen derart angeordnet sein, dass dasjenige Ende der Permanentmagnete einer Segmentierungsanordnung, welches am weitesten innen liegt, also welches den geringsten radialen Abstand zu der Rotationsachse aufweist, zur Symmetrieachse und damit zu der anderen Segmentierungsanordnung weist.

Ebenfalls umfasst die Erfindung als weitere Lösungen einen Rotor für eine permanenterregte elektrische Maschine mit zumindest einer Doppel-V-Anordnung sowie eine permanenterregte elektrische Maschine mit einem entsprechenden Rotor. Vorzugsweise handelt es sich bei dieser permanenterregten elektrischen Maschine um eine, welche für ein Kraftfahrzeug insbesondere für den Antrieb eines insbesondere elektrisch betriebenen Kraftfahrzeugs handelt, wobei das Kraftfahrzeug neben einem elektrischen Antrieb weitere Formen des Antriebs aufweisen kann.

Weitere Vorteile, Merkmale und Einzelheiten der Erfindung ergeben sich aus der nachfolgenden Beschreibung eines bevorzugten Ausführungsbeispiels sowie anhand der Zeichnungen. Die vorstehend in der Beschreibung genannten Merkmale und Merkmalskombinationen sowie die nachfolgend in der Figurenbeschreibung genannten und/oder in den Figuren alleine gezeigten Merkmale und Merkmalskombinationen sind nicht nur in der jeweils angegebenen Kombination, sondern auch in anderen Kombinationen oder in Alleinstellung verwendbar, ohne den Rahmen der Erfindung zu verlassen.

Im Folgenden sind Ausführungsbeispiele der Erfindung beschrieben. Hierzu zeigt:
- Fig. 1: zeigt eine schematische Darstellung eines Teils eines Rotors einer permanenterregten elektrischen Maschine, wie sie bereits aus dem Stand der Technik bekannt ist;
- Fig. 2: zeigt eine schematische Darstellung einer Ausführungsform einer Segmentierungsanordnung gemäß der Erfindung;
- Fig. 3: zeigt eine andere Darstellung einer Ausführungsform einer Doppel-V-Anordnung umfassend zwei Segmentierungsanordnung gemäß der Erfindung;
- Fig. 4: zeigt eine schematische Darstellung eines Teils einer permanenterregten elektrischen Maschine; und
- Fig. 5: zeigt verschiedene Ausführungen einer Segmentierungsanordnung gemäß der Erfindung.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden. Daher soll die Offenbarung auch andere als die dargestellten Kombinationen der Merkmale der Ausführungsformen umfassen. Des Weiteren sind die beschriebenen Ausführungsformen auch durch weitere der bereits beschriebenen Merkmale der Erfindung ergänzbar.

In den Figuren bezeichnen gleiche Bezugszeichen jeweils funktionsgleiche Elemente.

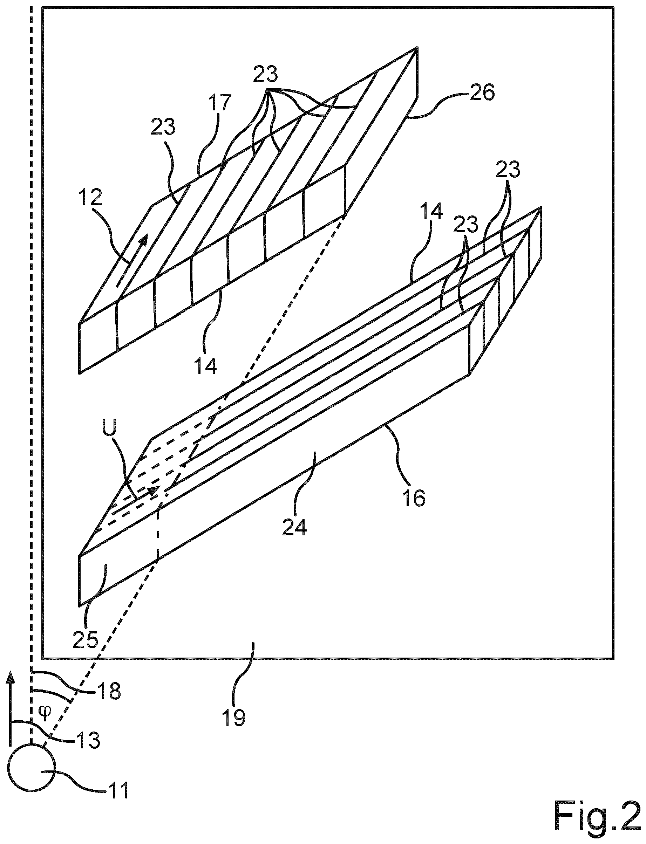

Fig. 2 zeigt eine Ausführungsform der Segmentierungsanordnung 19, wobei zusätzlich die Rotationsachse 11 eines Rotors, in welchem sich die Segmentierungsanordnung 19 befindet, eingezeichnet ist sowie die Symmetrieachse 18 der Doppel-V-Anordnung 15, von der die dargestellte Segmentierungsanordnung 19 ein Teil ist.

Die Segmentierungsanordnung 19 kann hierbei zwei Permanentmagnete 14 umfassen, wobei der eine Permanentmagnet, welcher sich in radialer Richtung 13 näher an der Rotationsachse 11 befindet, als innerer Magnet 16 bezeichnet wird und entsprechend derjenige Permanentmagnet, welcher sich in radialer Richtung weiter von der Rotationsachse 11 weg befindet, als äußerer Magnet 17 bezeichnet wird. Beide Permanentmagnete 14 können hierbei Segmentierungsgrenzen 23 aufgrund einer Segmentierung aufweisen, wobei Beispiele für eine Segmentierung in Fig. 1 durch die Bezugszeichen 20 und 21 gegeben sind.

Die Segmentierungsgrenzen 23 des äußeren Magneten 17 können dabei vorzugsweise in axialer Richtung 12 laufen, wie es in Fig. 2 dargestellt ist. Die Segmentierungsrichtung 22 des äußeren Magneten kann jedoch allgemein einen Winkel α2 mit der axialen Richtung 12 aufweisen, welcher betragsmäßig von 0° bis 45° gehen kann. Zusätzlich oder alternativ dazu können die Segmentierungsgrenzen 23 des inneren Magneten 16 entlang der Umlaufrichtung U verlaufen, wie es in Fig. 2 dargestellt ist. Die Segmentierungsrichtung 22 des inneren Magneten 16 kann jedoch einen Winkel α mit der Umlaufrichtung aufweisen, welcher betragsmäßig von 0° bis 45° gehen kann. Besonders bevorzugt ist hierbei eine Konstellation der Segmentierungsrichtungen 22, bei welcher der Winkel β zwischen der Segmentierungsrichtung 22 des inneren Magneten 16 und der Segmentierungsrichtung 22 des äußeren Magneten 17 betragsmäßig von 80° bis 100° gehen kann, vorzugsweise jedoch den Wert 90° annimmt, wie es in dem Ausführungsbeispiel in Fig. 2 dargestellt ist.

Während die Segmentierung des äußeren Magneten 17 bevorzugt eine vollständige Segmentierung ist, bei welcher zumindest 90% derjenigen zumindest einen Oberfläche, welche den größten Flächeninhalt aufweist, durch Segmentierungsgrenzen 23 gekennzeichnet ist, kann es sich auch bei der Segmentierung des inneren Magneten 16 um eine vollständige Segmentierung handeln. Bevorzugt handelt es sich jedoch bei der Segmentierung des inneren Magneten 16 um eine nicht-vollständige Segmentierung, sodass der innere Magnet 16 lediglich eine Segmentierung des Nicht-Überdeckungsbereichs 24 aufweist, während der Überdeckungsbereich 25 keine Segmentierung aufweist.

Hierbei bildet der Überdeckungsbereich 25 jenen Winkelbereich, in welchem sich sowohl der innere Magnet 16 als auch der äußere Magnet 17 befinden, wobei sich der äußere Magnet 17 vollständig im Überdeckungsbereich 25 befindet. Der Überdeckungsbereich 25 wird hierbei durch einen Winkel φ beschrieben, welcher in Umfangsrichtung von der Symmetrieachse 18 in diejenige Richtung geht, in welcher sich die Permanentmagnete 14 und somit die Segmentierungsanordnung 19 befindet. Im vorliegenden Ausführungsbeispiel, welches in Fig. 2 dargestellt ist, befindet sich die Segmentierungsanordnung 19 rechts von der Symmetrieachse 18, wodurch der Winkel φ von der Symmetrieachse 18 aus im Uhrzeigersinn gemessen wird.

Der Überdeckungsbereich 25 ist also jener Winkelbereich, welcher durch den Winkel φ definiert wird, also jener Bereich, welcher auf der einen Seite durch die Symmetrieachse 18 begrenzt wird und andererseits durch eine Gerade in radialer Richtung 13, welche mit der Symmetrieachse einen Winkel φ einschließt. Der Winkel φ ist hierbei so gewählt, dass die Gerade in radialer Richtung, welche den Überdeckungsbereich 25 abgrenzt, das äußere Ende 26 des äußeren Magneten 17 berührt. Das äußere Ende 26 des äußeren Magneten 17 ist hierbei durch denjenigen Punkt und/oder diejenige Kante des äußeren Magneten 17 definiert, dessen betragsmäßig gemessener Winkelabstand φ zwischen der Symmetrieachse 18 und derjenigen Geraden in radialer Richtung, welche den Punkt und/oder die Kante berührt, maximal ist. Bevorzugt ist der Überdeckungsbereich 25 nur derjenige Bereich des inneren Magneten 16, welcher sich im über den Winkel φ definierten Überdeckungsbereich 25 befindet.

Der Nicht-Überdeckungsbereich 24 hingegen ist jener Bereich, welcher direkt an den Überdeckungsbereich 25 insbesondere des inneren Magneten 16 anschließt und größere Werte für φ aufweist als Punkte im Überdeckungsbereich 25. Der Nicht-Überdeckungsbereich 24 kann hierbei vom Überdeckungsbereich 25 des inneren Magneten 16 bis zum äußeren Ende des inneren Magneten 16 gehen, wobei das äußere Ende des inneren Magneten analog zum äußeren Ende 26 des äußeren Magneten 17 definiert sein kann.

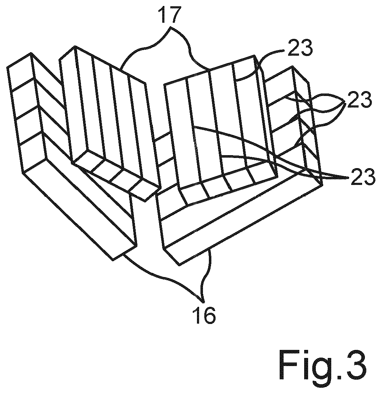

Fig. 3 zeigt schematisch eine Doppel-V-Anordnung umfassend zwei Segmentierungsanordnungen aus einer anderen Perspektive als sie in Fig. 1 und Fig. 2 dargestellt sind. Hierzu zeigt Fig. 3 zwei äußere Magnete 17 und zwei innere Magnete 16, welche jeweils eine Segmentierung und hierdurch Segmentierungsgrenzen 23 aufweisen. Diese Segmentierungsgrenzen 23 können hierbei eine Ausrichtung haben, sodass diese wie beispielshaft in Fig. 3 gezeigt, senkrecht aufeinander stehen, wobei die Segmentierungsgrenzen 23 der äußeren Magnete 17 entlang der axialen Richtung ausgerichtet sein können und die Segmentierungsgrenzen 23 der inneren Magnete entlang der Umfangsrichtung U ausgerichtet sein können.

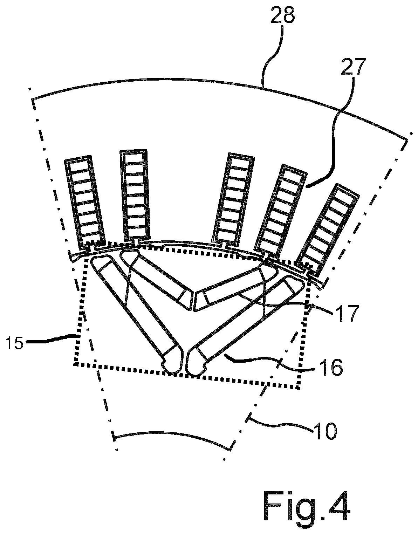

Fig. 4 zeigt eine schematische Darstellung einer permanenterregten elektrischen Maschine umfassend einen Rotor 10 und einen Stator 28, wobei sich in dem Stator Spulen 27 befinden. In dem Rotor hingegen sind Permanentmagnete 14 entsprechend zumindest einer Doppel-V-Anordnung 15 angeordnet, wobei die Permanentmagnete in innere Magnete 16 und äußere Magnete 17 gruppiert werden können, sowie die inneren Magneten 16 jeweils einen Überdeckungsbereich 25 und einen Nicht-Überdeckungsbereich 24 aufweisen können. Deren gemeinsame Grenz ist durch den Winkel φ festgelegt ist.

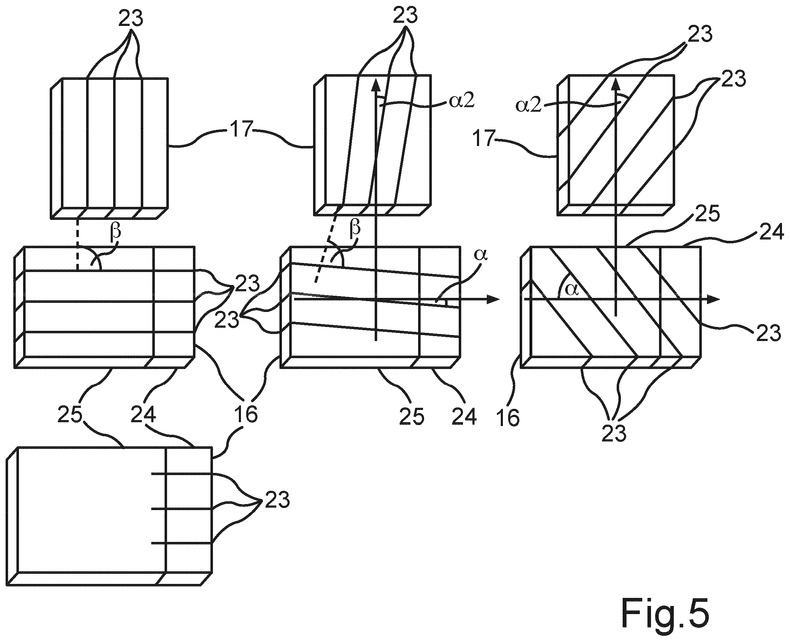

Fig. 5 hingegen zeigt verschiedene Ausführungsformen der Segmentierungsanordnung, wobei in der oberen Reihe die äußeren Magnete 17 dargestellt sind, während in der mittleren und unteren Reihe die inneren Magnete 16 dargestellt sind, welche jeweils mit dem in der oberen Reihe der selben Spalte liegenden äußeren Magneten 17 eine Ausführungsform der Segmentierungsanordnung bilden können, bei welcher der Winkel β zwischen den Segmentierungsrichtungen 90° beträgt.

Hierbei kann der innere Magnet 16 jeweils in einen Überlappungsgereich 25 und einen Nicht-Überlappungsbereich 24 unterteilt werden, wobei in dem Beispiel des inneren Magneten 16 in der untersten Reihe nur eine Segmentierung des Nicht-Überlappungsbereichs 25 vorliegt.

Die horizontalen Pfeile veranschaulichen die Umfangsrichtung U als Orientierung für die Definition des Winkels α, die vertikalen Pfeile die axiale Richtung für die Definition des Winkels α2.

Ein besonders bevorzugtes Ausführungsbeispiel ist im Folgenden gegeben:
Besonders bevorzugt bei Rotoren insbesondere für permanenterregte elektrische Maschinen ist eine Doppel-V-Anordnung der Permanentmagnete. Die sind in der Regel segmentiert, um die Wirbelstromverluste an den Permanentmagneten zu reduzieren. Die Segmentierung ist bei allen Magneten entweder in Umlaufrichtung oder axialer Richtung ausgeführt. Dadurch können die möglichen Verlust-Einsparungen nicht vollständig ausgeschöpft werden.

Eine Lösung besteht darin, für Permanentmagnete in einer Segmentierungsanordnung die verschiedenen Magnetlagen mit unterschiedlichen Segmentierungsrichtungen auszuführen. Der innere Magnet und der äußere Magnet weisen also unterschiedliche Segmentierungsrichtungen auf. Die Verluste sind minimiert, wenn die Segmentierungsrichtung des inneren Magnets einem bestimmten Winkelversatz zu der Segmentierungsrichtung des äußeren Magnets hat.

Die Lösung kann darin bestehen, dass zwischen der Segmentierungsrichtung des äußeren Magneten und des inneren Magneten ein Winkelversatz der Segmentierungsrichtungen vorliegt. Im Wesentlichen handelt es sich dabei um die Ausrichtung der Segmentierung des inneren Magnets, welche bevorzugt orthogonal zu der Segmentierungsrichtung des äußeren Magneten ist, jedoch allgemein einen Winkel von 80° bis 100° haben kann. Sowohl der innere als auch der äußere Magnet kann auf unterschiedliche Weise segmentiert werden, entweder vollständig (ganz) oder teilweise.

Zusätzlich bietet dieser Winkelversatz die Möglichkeit, den inneren Magnet nicht vollständig zu segmentieren. Es kann eine partielle Segmentierung ausreichen, wobei lediglich eine Segmentierung im Nicht-Überdeckungsbereich erfolgt.

Ein Reduzieren von Wirbelstromverluste an den Permanentmagneten in rotierenden permanenterregten elektrischen Maschinen insbesondere durch die Segmentierungsanordnung kann resultieren in einer Wirkungsgradsteigerung und/oder einer Reduktion der Temperatur des Magneten, wodurch eine Reduktion der Verwendung seltener Erden bei der Herstellung folgen kann. Es kann aus der Segmentierungsanordnung also eine Reduktion der Herstellungskosten der Permanentmagnete durch eine Reduktion der bei der Herstellung benötigten seltenen Erden folgen, da die Temperatur der Permanentmagnete durch die Reduktion der elektrischen Wirbelströme geringer ist.

Eine nicht vollständige Segmentierung des unteren inneren Magneten kann die Segmentierungskosten reduzieren und den Drehmomentverlust verringern, welcher durch eine Segmentierung entsteht.

Weitere bevorzugte Ausführungsformen sind im Folgenden beschrieben:
So können Permanentmagnete bei einer Doppel-V-Anordnung im Rotor einer elektrischen Maschine speziell segmentiert werden, um Wirbelströme in den Magneten zu reduzieren und damit die Effizienz und auch Performance zu steigern. Dabei wird verwendet, Magnete zu segmentieren um Wirbelströme zu reduzieren. Insbesondere kann hierbei die Kombination und Ausrichtung der beiden Segmentierungsrichtungen zwischen den beiden Magneten (Lagen) in der Doppel-V-Anordnung betrachtet werden. Hierbei ist dies dabei symmetrisch für die beiden Schenkel des Vs. Somit kann nur eine Segmentierungsanordnung (ein Schenkel der Doppel-V-Anordnung) betrachtet werden, wobei anschließend eine Erweiterung auf beide Schenkelerfolgen kann.

Die Segmentierungsanordnung kann hierbei insbesondere eine (vollständige) Segmentierung des radial äußeren Magneten in Umfangsrichtung umfassen, so dass die Schnitte bzw. Segmentgrenzen axial verlaufen. Hingegen kann die Segmentierung des radial inneren Magneten vor allem nur im nicht von äußeren Magneten überdeckten Bereich (Nicht-Überdeckungsbereich) und dort (im Wesentlichen) axial ausgerichtet sein, so dass hier die Schnitte und Segmentgrenzen in Umfangsrichtung verlaufen können und damit im Wesentlichen orthogonal zur Segmentierung des äußeren Magneten sein können. Alternativ hierzu kann innere Magnet vollständig segmentiert sein.

Eine Segmentierung kann hierbei auf vielfältige Weise erfolgen, es gibt also verschiedene Möglichkeiten beziehungsweise Methoden, eine Segmentierung durchzuführen. Insbesondere der äußere Magnet kann hierbei frei in der Wahl der Art und Weise der Segmentierung gestaltet werden.

Für den inneren Magneten kann eine Segmentierung erfolgen, wobei die Segmentierung insbesondere im nicht vom äußeren Magneten überdeckten Bereich (Nicht-Überdeckungsbereich) im Wesentlichen orthogonal zur Segmentierung des äußeren Magneten ist. (innerer und äußerer Magnet im Doppel-V können nicht gleich lang sein, insbesondere kann der radial innere Magnet länger und somit nur im inneren radialen Winkelbereich des V (Überdeckungsbereich) vom äußeren Magneten überdeckt sein und im äußeren Bereich (Nicht-Überdeckungsbereich) nicht vom äußeren Magneten überdeckt sein). Die Segmentierung des äußeren Magneten kann dabei im Wesentlichen in Umfangsrichtung segmentiert sein (Schnitte/Segmentgrenzen verlaufen im Wesentlichen axial). Zusätzlich oder alternativ dazu kann beim radial inneren Magneten im Wesentlichen orthogonal zur Segmentierung des äußeren Magneten eben Segmentierung in axialer Richtung vorliegen (Schnitte/Segmentgrenzen in Umfangsrichtung).

Im Wesentlichen in Umfangsrichtung bedeutet hierbei, dass der äußere Magnet einen spitzen Winkel (45°>α2>0°) zwischen den Schnitten und der axialen Richtung (Pfeil nach oben in Fig. 5) aufgewiesen werden kann. Dies kann bedeuten, dass ein spitzer Winkel (45°>α>0°) zwischen den Schnitten und der Umfangsrichtung (Pfeil nach rechts in Fig. 5) beim inneren Magneten entstehen kann. Insbesondere können die beiden Ausrichtungen im Wesentlichen orthogonal sein und damit einen Winkel zueinander von 80°<β<100° aufweisen.

Hierbei kann die Segmentierung auf zumindest eine der verschiedenen Arten erfolgen, z.B. Stapeln von (Einzel)Magneten, Schnitte in den Magneten, welche durchgehen (Schnitte) oder auch nur einen Teilbereich durchschneiden (Einschnitte). Zusätzlich oder alternativ dazu kann das Muster der Segmentierung zumindest ein der folgenden Formen aufweisen, beispielsweise kammartig, mäanderartig und/oder durchgängig.

Bei der Segmentierung des inneren Magneten kann man zumindest bei Vorliegen des Merkmals, dass nur der nicht überdeckte Bereich also der Nicht-Überdeckungsbereich segmentiert ist, dahingehend eingeschränkt sein, dass keine Stapel von Magneten möglich sind, sondern Schnitte und/oder Einschnitte in den Magneten von außen herein vorliegen können. Diese können durchgängig (Schnitte; zerschneiden hier vollständig) oder nur teilweise (Einschnitte; in der Dicke bleibt eine Materialbrücke stehen) sein. Auch eine mäanderform kann hierausgeschlossen werden, wodurch die Schnitte und/oder Einschnitte immer bis zum äußersten Ende des Magneten reichen können.

Alternativ hierzu kann der innere Magnet ganz (vollflächig) segmentiert sein (auch im überdeckten Bereich; Segmentierung im Überdeckungsbereich und Nicht-Überdeckungsbereich). Dadurch kann sich hier als Segmentierung ein Stapel von Magneten ergeben. Zusätzlich oder alternativ können auch Schnitte der Länge nach möglich sein. Die Segmentierung des äußeren Magneten kann hingegen beliebig gewählt sein. Die Ausrichtung der Segmentierung des äußeren Magneten kann im Wesentlichen orthogonal zur Ausrichtung der Segmentierung des inneren Magneten sein.

Insbesondere kann die Segmentierung über einen Stapel von Magneten oder Schnitte und/oder Einschnitte über zumindest 90% der Oberfläche des Magneten erfolgen. Insbesondere kann dies vorliegen, wenn der innere Magnet ganz (vollständig, also im Überdeckungsbereich und Nicht-Überdeckungsbereich) segmentiert ist und die Ausrichtung bei 90° liegt (der Winkel β beträgt betragsmäßig 90°), so dass die Magnete des Stapels alle eine rechteckige Quaderform ergeben beziehungsweise die Schnitte und/oder Einschnitte parallel insbesondere planparallel verlaufen.

Die Segmentierungsrichtungen des inneren Magneten und des äußeren Magneten können im Wesentlichen orthogonal (zwischen 80° und 100°) zueinander sein. Der Innere Magnet kann lediglich im Nicht-Überdeckungsbereich segmentiert sein, sodass keine Segmentierung im Nicht-Überdeckungsbereich vorliegt. Es kann aber auch eine vollständige Segmentierung des inneren Magneten vorliegen, bei welcher ebenfalls eine Segmentierung des Überdeckungsbereichs vorliegt.

Hierbei kann die Ausrichtung der Segmentierung eine Rolle spielen. Der äußere Magnet kann hierbei in Umfangsrichtung segmentiert sein und/oder einen spitzen Winkel (kleiner als 45°) zwischen den Segmentgrenzen und axialer Richtung aufweisen. Dies kann bei im Wesentlich orthogonal zueinander liegenden Segmentierungsrichtungen des inneren und äußeren Magneten zu einem spitzen Winkel (kleiner als 45°) zwischen den Segmentgrenzen des inneren Magneten und der Umfangsrichtung führen.

Insgesamt zeigt das Ausführungsbeispiel also eine winkelversetzte Segmentierung der Magnete in einer mehrlagigen Magnet-Anordnung, die hier auch als Segmentierungsanordnung bezeichnet ist.

### Bezugszeichenliste

- 10: Rotor
- 11: Rotationsachse
- 12: axiale Richtung
- 13: radiale Richtung
- 14: Permanentmagnete
- 15: Doppel-V-Anordnung
- 16: innerer Magnet
- 17: äußerer Magnet
- 18: Symmetrieachse
- 19: Segmentierungsanordnung
- 20: Schnitte und/oder Einschnitte und/oder Ausschneidungen
- 21: elektrisch nichtleitende Schicht
- 22: Segmentierungsrichtung
- 23: Segmentierungsgrenzen
- 24: Nicht-Überdeckungsbereich
- 25: Überdeckungsbereich
- 26: äußeres Ende des äußeren Magneten
- 27: Spulen
- 28: Stator

## Patentansprüche

1. Segmentierungsanordnung (19) eines inneren Magneten (16) und eines äußeren Magneten (17) eines Schenkels einer Doppel-V-Anordnung (15) von Permanentmagneten in einem Rotor (10) für eine permanenterregte elektrische Maschine,
wobei bei dem Schenkel der innere Magnet (16) in radialer Richtung (13) bezüglich der Rotationsachse (11) gesehen weiter innen angeordnet ist als der äußere Magnet (17) **dadurch gekennzeichnet, dass**
eine Segmentierung des jeweiligen Magneten (16, 17), die sich im Wesentlichen durch eine einzige Richtung auszeichnet, wobei die Richtung durch die Segmentierungsgrenzen (23) bestimmt ist,
und die Segmentierungsgrenzen (23) der Segmentierung des äußeren Magneten (17) gegenüber den Segmentierungsgrenzen (23) der Segmentierung des inneren Magneten (16) einen Winkel β betragsmäßig von 80° bis 100° aufweisen.

2. Segmentierungsanordnung (19) nach Anspruch 1,
**dadurch gekennzeichnet, dass**
der innere Magnet (16) in einen Überdeckungsbereich (25) und einen direkt daran anschließenden Nicht-Überdeckungsbereich (24) unterteilt wird, wobei der Überdeckungsbereich (25) einen inneren radialen Winkelbereich des Schenkels beschreibt, in welchem sich sowohl der innere Magnet (16) als auch der äußere Magnet (17) befinden, während sich im Nicht-Überdeckungsbereich (24) lediglich der innere Magnet (16) befindet, wobei der innere Magnet (16) nur in dem Nicht-Überdeckungsbereich (24) die Segmentierung aufweist.

3. Segmentierungsanordnung (19) nach Anspruch 2,
**dadurch gekennzeichnet, dass**
die Segmentierung des inneren Magneten (16) bis zu einem äußeren Ende des inneren Magneten (16) reicht, wobei das äußere Ende dasjenige Ende des inneren Magneten (16) ist, bei welchem der Winkel φ zwischen einer Symmetrieachse (18) der Doppel-V-Anordnung (15) und dem äußeren Ende des inneren Magneten (16) maximal ist.

4. Segmentierungsanordnung (19) nach Anspruch 1,
**dadurch gekennzeichnet, dass**
der innere Magnet (16) vollständig segmentiert ist.

5. Segmentierungsanordnung (19) nach einem der vorhergehenden Ansprüche,
**dadurch gekennzeichnet, dass**
eine radiale Richtung (13) senkrecht auf einer axialen Richtung (12) bezüglich der Rotationsachse (11) steht und von der Rotationsachse (11) weg zeigt, eine Umfangsrichtung senkrecht auf der radialen Richtung (13) und der axialen Richtung (12) bezüglich der Rotationsachse (11) steht und der Winkel α zwischen den Segmentierungsgrenzen (23) des inneren Magneten (16) und Umfangsrichtung betragsmäßig einen Wert α von 0° bis 45° aufweist.

6. Segmentierungsanordnung (19) nach Anspruch 5,
**dadurch gekennzeichnet, dass**
der Winkel α zwischen den Segmentierungsgrenzen (23) des inneren Magneten (16) und Umfangsrichtung 0° beträgt.

7. Segmentierungsanordnung (19) nach einem der Ansprüche 4 bis 6,
**dadurch gekennzeichnet, dass**
es sich bei der Segmentierung des inneren Magneten (16) um eine Stapelung einzelner Magnete und/oder um Schnitte und/oder Einschnitte und/oder Ausschneidungen (20) auf zumindest 90% der Gesamtfläche des inneren Magneten (16) handelt und somit durch die Segmentierung entstehende Bereiche eine Quaderform aufweisen.

8. Segmentierungsanordnung (19) nach einem der vorhergehenden Ansprüche,
**dadurch gekennzeichnet, dass**
der äußere Magnet (17) eine Segmentierung aufweist, deren Segmentierungsgrenzen (23) zu der axialen Richtung (12) bezüglich der Rotationsachse (11) betragsmäßig einen Winkel α2 von 0° bis 45° aufweisen.

9. Doppel-V-Anordnung (15) umfassend zwei Segmentierungsanordnungen (19),
**dadurch gekennzeichnet, dass**
jede Segmentierungsanordnung (19) die Merkmale eines der vorhergehenden Ansprüche umfasst sowie jeweils einen Schenkel der Doppel-V-Anordnung (15) bildet, wobei die Segmentierungsanordnungen (19) derart ausgebildet sind, dass diese symmetrisch zur Symmetrieachse (18) der Schenkel der Doppel-V-Anordnung (15) sind.

10. Rotor (10) für eine permanenterregte elektrische Maschine mit zumindest einer Doppel-V-Anordnung (15) nach Anspruch 9.

11. Permanenterregte elektrische Maschine mit einem Rotor (10) nach Anspruch 10.

## Claims

1. Segmentation arrangement (19) for an inner magnet (16) and an outer magnet (17) of a leg of a double-V arrangement (15) of permanent magnets in a rotor (10) for a permanent magnet electric machine,
wherein, in the leg, the inner magnet (16) is arranged further inward, considered in the radial direction (13) with respect to the rotation axis (11), than the outer magnet (17), **characterized in that**
each magnet (16, 17) segmented, which segmentation is substantially **characterized by** a single direction, wherein the direction is determined by the segmentation boundaries (23), and
the segmentation boundaries (23) of the segmentation of the outer magnet (17) have an angle β with an absolute value of 80° to 100° to the segmentation boundaries (23) of the segmentation of the inner magnet (16).

2. Segmentation arrangement (19) according to claim 1,
**characterized in that**
the inner magnet (16) is divided into an overlapping region (25) and a directly adjoining non-overlapping region (24), wherein the overlapping region (25) describes an inner radial angular range of the leg in which both the inner magnet (16) and the outer magnet (17) are located, while only the inner magnet (16) is located in the non-overlapping region (24), wherein the inner magnet (16) is segmented only in the non-overlapping region (24).

3. Segmentation arrangement (19) according to claim 2,
**characterized in that**
the inner magnet (16) is segmented up to an outer end of the inner magnet (16), wherein the outer end is the end of the inner magnet (16) at which the angle φ between a symmetry axis (18) of the double-V arrangement (15) and the outer end of the inner magnet (16) is maximal.

4. Segmentation arrangement (19) according to claim 1,
**characterized in that**
the inner magnet (16) is completely segmented.

5. Segmentation arrangement (19) according to any of the preceding claims,
**characterized in that**
a radial direction (13) is perpendicular to an axial direction (12) with respect to the rotation axis (11) and points away from the rotation axis (11), a circumferential direction is perpendicular to the radial direction (13) and the axial direction (12) with respect to the rotation axis (11) and the angle α between the segmentation boundaries (23) of the inner magnet (16) and the circumferential direction has an absolute value α of 0° to 45°.

6. Segmentation arrangement (19) according to claim 5,
**characterized in that**
the angle α between the segmentation boundaries (23) of the inner magnet (16) and the circumferential direction is 0°.

7. Segmentation arrangement (19) according to any of claims 4 to 6,
**characterized in that**
segmenting the inner magnet (16) involves stacking individual magnets and/or involves cuts and/or notches and/or cutouts (20) over at least 90% of the total area of the inner magnet (16) and thus regions created as a result of the segmentation have a cuboid shape.

8. Segmentation arrangement (19) according to any of the preceding claims,
**characterized in that**
the outer magnet (17) is segmented, and the segmentation boundaries (23) of this segmentation have an angle α2 with an absolute value of 0° to 45° to the axial direction (12) with respect to the rotation axis (11).

9. Double-V arrangement (15) comprising two segmentation arrangements (19),
**characterized in that**
each segmentation arrangement (19) comprises the features of any of the preceding claims and each forms one leg of the double-V arrangement (15), wherein the segmentation arrangements (19) are designed such that they are symmetrical with respect to the symmetry axis (18) of the legs of the double-V arrangement (15).

10. Rotor (10) for a permanent magnet electric machine comprising at least one double-V arrangement (15) according to claim 9.

11. Permanent magnet electric machine comprising a rotor (10) according to claim 10.

## Revendications

1. Agencement de segmentation (19) d'un aimant interne (16) et d'un aimant externe (17) d'une branche d'un agencement en double V (15) d'aimants permanents dans un rotor (10) pour une machine électrique à excitation permanente,
dans lequel, dans la branche, l'aimant interne (16), vu dans la direction radiale (13) par rapport à l'axe de rotation (11), est disposé plus à l'intérieur que l'aimant externe (17), **caractérisé en ce que**
une segmentation de l'aimant (16, 17) respectif qui se caractérise sensiblement par une seule direction, dans lequel la direction est déterminée par les limites de segmentation (23), et
les limites de segmentation (23) de la segmentation de l'aimant externe (17) présentent, par rapport aux limites de segmentation (23) de la segmentation de l'aimant interne (16), un angle β allant de 80° à 100° en valeur absolue.

2. Agencement de segmentation (19) selon la revendication 1,
**caractérisé en ce que**
l'aimant interne (16) est divisé en une zone de recouvrement (25) et en une zone de non-recouvrement (24) qui s'y raccorde directement, dans lequel la zone de recouvrement (25) décrit une zone angulaire radiale intérieure de la branche dans laquelle se trouvent à la fois l'aimant interne (16) et l'aimant externe (17), tandis que dans la zone de non-recouvrement (24) se trouve uniquement l'aimant interne (16), dans lequel l'aimant interne (16) ne présente la segmentation que dans la zone de non-recouvrement (24).

3. Agencement de segmentation (19) selon la revendication 2,
**caractérisé en ce que**
la segmentation de l'aimant interne (16) s'étend jusqu'à une extrémité externe de l'aimant interne (16), dans lequel l'extrémité externe est l'extrémité de l'aimant interne (16) pour laquelle l'angle φ entre un axe de symétrie (18) de l'agencement en double V (15) et l'extrémité externe de l'aimant intérieur (16) est maximal.

4. Agencement de segmentation (19) selon la revendication 1,
**caractérisé en ce que**
l'aimant interne (16) est entièrement segmenté.

5. Agencement de segmentation (19) selon l'une des revendications précédentes, **caractérisé en ce que**
une direction radiale (13) est perpendiculaire à une direction axiale (12) par rapport à l'axe de rotation (11) et est orientée à l'opposé de l'axe de rotation (11), une direction circonférentielle est perpendiculaire à la direction radiale (13) et à la direction axiale (12) par rapport à l'axe de rotation (11) et l'angle α entre les limites de segmentation (23) de l'aimant interne (16) et la direction circonférentielle présente une valeur α allant de 0° à 45° en valeur absolue.

6. Agencement de segmentation (19) selon la revendication 5,
**caractérisé en ce que**
l'angle α entre les limites de segmentation (23) de l'aimant interne (16) et la direction circonférentielle est de 0°.

7. Agencement de segmentation (19) selon l'une des revendications 4 à 6,
**caractérisé en ce que**
il s'agit, lors de la segmentation de l'aimant interne (16), d'un empilement d'aimants individuels et/ou de coupes et/ou d'entailles et/ou de découpes (20) sur au moins 90 % de la surface totale de l'aimant interne (16), et ainsi, des zones résultant de la segmentation présentent une forme parallélépipédique.

8. Agencement de segmentation (19) selon l'une des revendications précédentes, **caractérisé en ce que**
l'aimant externe (17) présente une segmentation dont les limites de segmentation (23) par rapport à la direction axiale (12) par rapport à l'axe de rotation (11) présentent un angle α2 allant de 0° à 45° en valeur absolue.

9. Agencement en double V (15) comprenant deux agencements de segmentation (19),
**caractérisé en ce que**
chaque agencement de segmentation (19) comprend les caractéristiques de l'une des revendications précédentes et forme respectivement une branche de l'agencement en double V (15), dans lequel les agencements de segmentation (19) sont conçus de telle sorte qu'ils sont symétriques par rapport à l'axe de symétrie (18) des branches de l'agencement en double V (15).

10. Rotor (10) pour une machine électrique à excitation permanente comportant au moins un agencement en double V (15) selon la revendication 9.

11. Machine électrique à excitation permanente comportant un rotor (10) selon la revendication 10.
